# EUROPÄISCHE PATENTSCHRIFT

(11) **EP 2 603 390 B1**
(45) Veröffentlichungstag und Bekanntmachung des Hinweises auf die Patenterteilung: **14.01.2015**
(21) Anmeldenummer: 11749082.1
(22) Anmeldetag: 29.07.2011
(51) Int. Cl.: B60J 5/10, E05F 5/12

(54) **ANTRIEBSANORDNUNG ZUR MOTORISCHEN VERSTELLUNG EINER KLAPPENANORDNUNG**
DRIVE ARRANGEMENT FOR THE MOTORIZED ADJUSTMENT OF A PANEL ARRANGEMENT
DISPOSITIF D'ENTRAÎNEMENT POUR LE RÉGLAGE PAR MOTEUR ÉLECTRIQUE D'UN ENSEMBLE HAYON

(30) Priorität: 12.08.2010 DE 102010034203
(43) Veröffentlichungstag der Anmeldung: 19.06.2013
(73) Patentinhaber: Brose Fahrzeugteile GmbH & Co. KG, Hallstadt, 96103 Hallstadt (DE)
(72) Erfinder: EGGELING, Jürgen, 45475 Mühlheim (DE); HELLMICH, Dirk, 47249 Duisburg (DE); DÜNNE, Klaus, 40882 Ratingen (DE)
(74) Vertreter: Gottschald, Jan
(86) Internationale Anmeldenummer: PCT/EP2011/003816
(87) Internationale Veröffentlichungsnummer: WO 2012/019718

(56) Entgegenhaltungen:
- EP-A1- 1 065 083
- EP-A1- 1 652 708
- WO-A1-02/064929
- JP-A- 9 170 374

## Beschreibung

Die vorliegende Erfindung betrifft eine Antriebsanordnung zur motorischen Verstellung einer Klappenanordnung gemäß Anspruch 1 sowie eine Klappenanordnung gemäß Anspruch 10.

Antriebsanordnungen zur motorischen Verstellung einer Klappenanordnung für ein Kraftfahrzeug, insbesondere einer Heckklappenanordnung, sind seit langem bekannt. Solche Antriebsanordnungen haben sich für einflügelige Klappenanordnungen bereits durchgesetzt (WO 2010/046008 A1). Die Antriebsanordnung ist dabei regelmäßig mit einer Antriebssteuerung zur Umsetzung einer jeweils vorgegebenen Soll-Klappenverstellung mittels mindestens eines Antriebs ausgestattet. Die Vorgabe der Soll-Klappenverstellung geht auf eine Betätigung eines Benutzers zurück, der beispielsweise die Auf-Taste einer Funkfernbedienung drückt.

Mit der Forderung gesteigerter Einsatzflexibilität sind in den letzten Jahren Kraftfahrzeuge, insbesondere SUVs (Sport Utility Vehicles), zunehmend mit zweiflügeligen Klappensystemen ausgestattet worden (DE 196 19 126 A1). Das hier im Vordergrund stehende Klappenkonzept geht auf zwei Klappenflügel zurück, die um zwei voneinander beabstandete, parallele Schwenkachsen schwenkbar sind. Die grundsätzliche Möglichkeit der separaten Verstellung der Klappenflügel führt zwar zu einer beträchtlichen Erhöhung der Einsatzflexibilität. Sie stellt aber auch ganz besondere Anforderungen an die Antriebsanordnung, sofern eine motorische Verstellung der Klappenflügel gefordert ist. Regelmäßig wird es nämlich so sein, dass die Bewegungsbereiche der Klappenflügel derart überlappen, dass zur Vermeidung von Kollisionen zumindest in einem bestimmten Bewegungsbereich eine vorbestimmte Öffnungs- und Schließreihenfolge einzuhalten ist.

Das Dokument EP 1 065 083 A1 offenbart den Oberbegriff des Anspruchs 1.

Der Erfindung liegt die Aufgabe zugrunde, eine Antriebsanordnung anzugeben, mit der die Flexibilität einer zweiflügeligen Klappenanordnung voll ausgenutzt werden kann.

Das obige Problem wird mit einer Antriebsanordnung gemäß Anspruch 1 gelöst.

Die gedankliche Basis für die vorschlagsgemäße Lösung bildet zunächst einmal eine Analyse der motorisch zu verstellenden Klappenanordnung.

Wesentlich ist zunächst, dass die beiden Klappenflügel der Klappenanordnung im Wesentlichen um zwei voneinander beabstandete Schwenkachsen schwenkbar sind. Mit "im Wesentlichen" ist hier gemeint, dass eine kreisförmige Schwenkbewegung nicht unbedingt gefordert ist. Beispielsweise ist unter dem Begriff "schwenkbar" auch eine kombinierte Schiebe- und Schwenkbcwegung zusammengefasst.

Im geschlossenen Zustand stehen die beiden Klappenflügel über ihre der jeweiligen Schwenkachse gegenüberliegenden freien Flügelenden miteinander in Eingriff. Hiermit ist ganz generell gemeint, dass eine irgendwie geartete Wechselwirkung zwischen den freien Flügelenden besteht. Ein ständiger Kraftfluss im geschlossenen Zustand ist aber nicht gefordert.

Die Anordnung ist nun so getroffen, dass sich die Bewegungsbereiche der Klappenflügel je nach Verstellzustand überlappen. Mit "Bewegungsbereich" ist stets der Bereich gemeint, der von einem Klappenflügel insgesamt bei seiner Verstellung überstrichen wird. Eine Überlappung der Bewegungsbereiche findet aber ausschließlich statt, sofern sich die Klappenflügel in ganz bestimmten, der jeweiligen Schließstellung vorgelagerten Schwenkbereichen befinden. Um Kollisionen zwischen den freien Flügelenden zu vermeiden, ist in diesen Schwenkbereichen eine vorbestimmte Öffnungs- und Schließreihenfolge zwischen den beiden Klappcnflügeln einzuhalten. Entsprechend werden diese Schwenkbereiche im Folgenden auch Kollisions-Schwenkbereiche genannt. Die Kollisions-Schwenkbereiche schließen auch die jeweilige Schließstellung der Klappenflügel ein.

Vorschlagsgemäß ist nun erkannt worden, dass irgendwelche Maßnahmen zur Kollisionsvermeidung nur getroffen werden müssen, wenn beide Klappenflügel in ihren jeweiligen Kollisions-Schwenkbercich gelangen. Entsprechend ist es vorschlagsgemäß vorgesehen, dass die beiden Kollisions-Schwenkbereiche in der Antriebssteuerung gespeichert sind.

Sofern die Soll-Klappenverstellung der vorbestimmten Öffnungs- und Schließreihenfolge in diesen Kollisions-Schwenkbereichen zuwiderlaufen sollte, löst die Antriebssteuerung eine ganz bestimmte Maßnahme zur Kollisionsvermeidung aus. Vorschlagsgemäß ist es hier vorgesehen, dass die Antriebssteuerung zur Kollisionsvermeidung einen der Klappenflügel in einer Ausweichbewegung vorübergehend aus seiner Ausgangsstellung heraus in eine außerhalb seines Kollisions-Schwenkbereichs liegende Parkstellung schwenkt.

Von der Antriebsstcuerung ist also lediglich zu überprüfen, ob beide Klappenflügel zu irgendeinem Zeitpunkt gleichzeitig in ihre jeweilige Kollisions-Schwenkbereiche gelangen oder gelangen werden, und, bejahendenfalls, ob dann die Öffnungs- oder Schließreihenfolge verletzt ist.

Die vorschlagsgemäße Maßnahme zur Kollisionsvermeidung ist insofern besonders leicht umzusetzen, als es nicht darauf ankommt, wo genau sich die Parkstellung befindet. Wesentlich ist lediglich, dass sich diese Parkstellung außerhalb des Kollisions-Schwenkbereichs des jeweiligen Klappenflügels befindet.

In diesem Zusammenhang darf darauf hingewiesen werden, dass die Ausweichbewegung des einen Klappenflügels grundsätzlich auch im Wesentlichen gleichzeitig zu der Bewegung bzw. den Bewegungen des anderen Klappenflügels vorgenommen werden kann.

Ein bevorzugtes Beispiel einer obigen Öffnungs- und Schließreihenfolge besteht darin, dass ein innerer Klappenflügel und ein äußerer Klappenflügel vorgesehen sind, wobei beim Schließen zunächst der innere und dann der äußere Klappernflügel und beim Öffnen zunächst der äußere und dann der innere Klappenflügel betätigt wird (Anspruch 5). Natürlich sind auch hier im Wesentlichen gleichzeitige Bewegungen der beiden Klappenflügel umfasst.

Die Umsetzung bevorzugter Soll-Klappenverstellungen ist Gegenstand der Ansprüche 6 und 7. Hier steht jeweils eine Bewegung des inneren Klappenflügels im Vordergrund, wobei der äußere Klappenflügel die Bewegung des inneren Klappenflügels "behindert". Entsprechend ist jeweils eine Ausweichbewegung des äußeren Klappenflügels derart vorgesehen, dass dieser Klappenflügel vorübergehend in eine außerhalb seines Kollisions-Schwenkbereichs liegende Parkstellung verstellt wird. Sobald die Kollisionsgefahr aufgehoben ist, wird der äußere Klappenflügel wieder in seine Ausgangsstellung zurückverstellt. Hier zeigt sich besonders deutlich, dass die Definition der Kollisions-Schwenkbereiche für die beiden Klappenflügel zu steuerungstechnisch besonders einfach realisierbaren Lösungen führt.

Nach einer weiteren Lehre, der ebenfalls eigenständige Bedeutung zukommt, wird eine Klappenanordnung für ein Kraftfahrzeug mit einer obigen Antriebsanordnung beansprucht. Auf alle Ausführungen, die geeignet sind, die Klappenanordnung zu beschreiben, darf verwiesen werden.

Im Folgenden wird die Erfindung anhand einer lediglich ein Ausführungsbeispiel darstellenden Zeichnung näher erläutert. In der Zeichnung zeigt
- Fig. 1: den Heckbereich eines Kraftfahrzeugs mit einer vorschlagsgemäßen Antriebsanordnung a) bei vollständig geschlossener Klappenanordnung und b) bei vollständig geöffneter Klappenanordnung,
- Fig. 2: die Klappenanordnung des Kraftfahrzeugs gemäß Fig. 1 in ganz schematischer Darstellung,
- Fig. 3: die Klappenanordnung gemäß Fig. 2a) im vollständig geschlossenen Zustand, b) während der Ausweichbewegung des oberen Klappenflügels, c) während der Durchführung der Soll-Klappenverstellung und d) während der Rückstellung des oberen Klappenflügels in die Ausgangsstellung.

Es darf vorab darauf hingewiesen werden, dass, sofern im Folgenden von einer Klappenanordnung die Rede ist, es sich bei dieser Klappenanordnung um eine Heckklappenanordnung, um eine Seitentüranordnung oder um eine sonstige Verschließeinrichtung eines Kraftfahrzeugs handeln kann. Insoweit ist der Begriff "Klappenanordnung" weit auszulegen. Im Folgenden ist ausschließlich von einer Heckklappenanordnung die Rede, was nicht beschränkend zu verstehen ist.

Die vorschlagsgemäße Antriebsanordnung dient der motorischen Verstellung einer zweiflügeligen Klappenanordnung für ein Kraftfahrzeug. Die Antriebsanordnung ist mit einer Antriebssteucrung 1 zur Ansteuerung zweier Antriebe 2, 3 ausgestattet. Die Antriebe 2, 3 sind jeweils einem Klappenflügel 4, 5 zugeordnet.

Grundsätzlich ist es auch denkbar, dass beide Klappenflügel 4, 5 über einen einzigen Antrieb 2, 3, der gegebenenfalls über einen Kupplungsmechanismus an die Klappenflügel 4, 5 angekuppelt wird, vorgesehen ist.

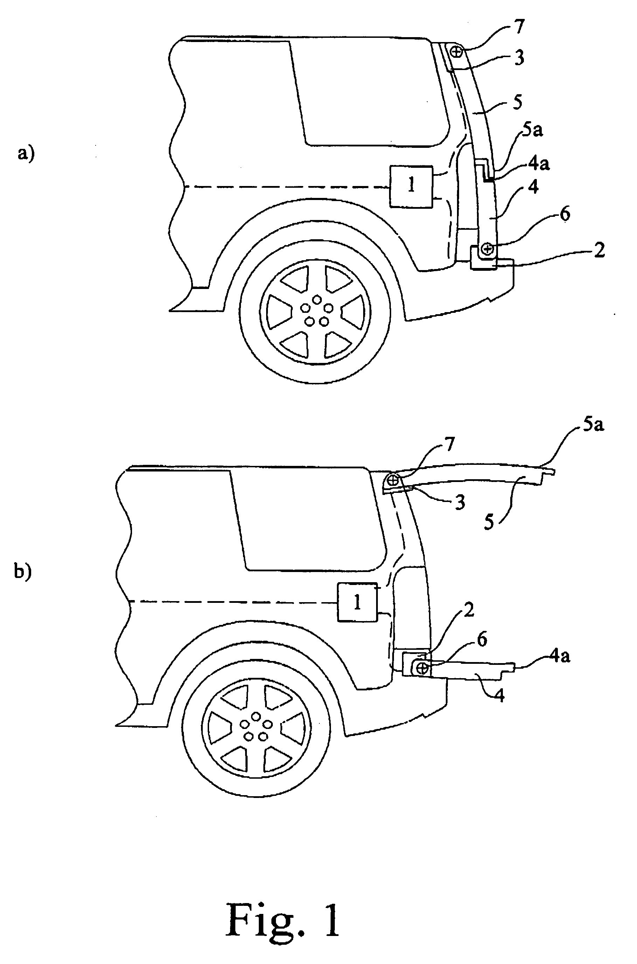

Die beiden Klappenflügel 4, 5 sind im Wesentlichen um zwei voneinander beabstandete parallele Schwenkachsen 6, 7 schwenkbar und stehen in dem in Fig. 1a) dargestellten, geschlossenen Zustand über ihre der jeweiligen Schwenkachse 6, 7 gegenüberliegenden freien Flügelenden 4a, 5a miteinander in Eingriff.

Es darf darauf hingewiesen werden, dass der Begriff "Klappenflügel" hier weit zu verstehen ist. Er umfasst beispielsweise auch eine schwenkbare Fensterscheibe, insbesondere eine schwenkbare Heckscheibe, die dann die grundsätzliche Funktion eines Klappenflügels 4, 5 übernimmt.

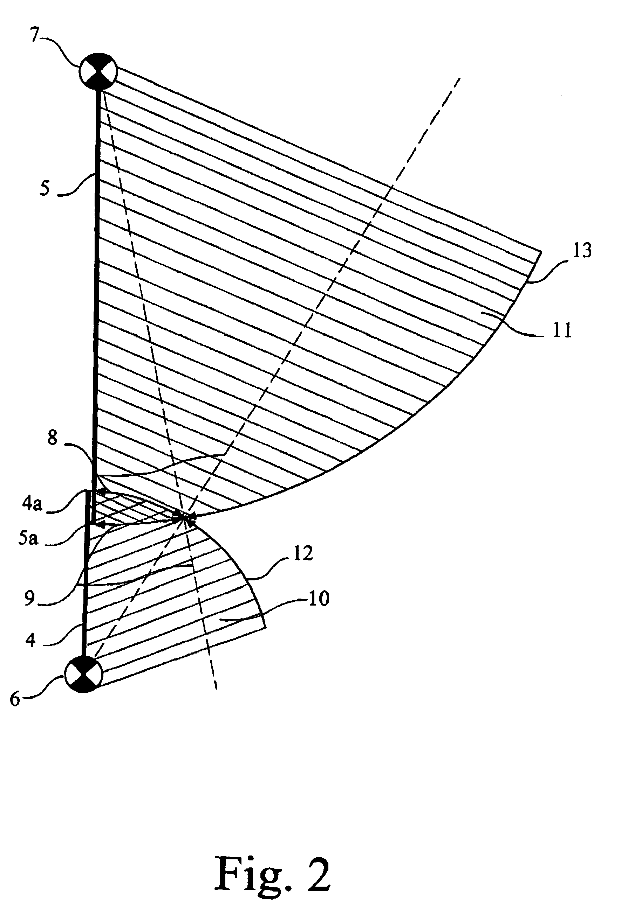

Ein Vergleich der Fig. 1a) und 1b) ergibt, dass bei der Ansteuerung der beiden Antriebe 2, 3 auf eine kollisionsfreie Schwenkbewegung der beiden Klappenflügel 4, 5 geachtet werden muss. Die geometrischen Zusammenhänge lassen sich am besten der Darstellung gemäß Fig. 2 entnehmen.

Den beiden Klappenflügeln 4, 5 lassen sich der jeweiligen Schließstellung vorgelagerte Kollisions-Schwenkbereiche 8, 9 zuordnen, in denen die Bewegungsbereiche 10, 11 der Klappenflügel 4, 5 derart überlappen, dass dort zur Vermeidung von Kollisionen zwischen den freien Flügelenden 4a, 5a eine vorbestimmte Öffnungs- und Schließreihenfolge einzuhalten ist. Beispielsweise ergibt sich aus der Darstellung gemäß Fig. 2, dass der untere Klappenflügel 4 erst nach dem oberen Klappenflügel 5 in Öffnungsrichtung verstellt werden kann. Details zu der hier vorgeschenen Öffnungs- und Schließreihenfolge werden weiter unten gegeben.

Wesentlich ist nun, dass die beiden Kollisions-Schwenkbereiche 8, 9 in der Antriebssteuerung 1 gespeichert sind. In Abhängigkeit von der jeweiligen Soll-Klappenverstcllung im Hinblick auf die Kollisions-Schwenkbereiche 8, 9 trifft die Antriebssteuerung 1 Maßnahmen zur Kollisionsvermeidung. Für den Fall, dass eine Soll-Klappenverstellung der vorbestimmten Öffnungs- und Schließreihenfölge in den Kollisions-Schwenkbereichen 8, 9 der Klappenflügel 4, 5 zuwiderläuft, schwenkt die Antriebssteuerung 1 zur Kollisionsvermeidung einen der Klappenflügel 4, 5 in einer Ausweichbewegung vorübergehend aus seiner Ausgangsstellung heraus in eine außerhalb seines Kollisions-Schwenkbereichs 8, 9 liegende Parkstellung. Dies wäre beispielsweise der Fall, wenn der untere Klappenflügel 4 aus der in Fig. 2 dargestellten Stellung heraus in Öffnungsrichtung verstellt werden sollte. In diesem Fall würde der obere Klappenflügel 5 vorübergehend in eine Parkstellung verschwenkt, bis der untere Klappenflügel 4 seinen Kollisions-Schwenkbereich 8 verlassen hat.

In besonders bevorzugter Ausgestaltung geht die Vorgabe der Soll-Klappenverstellung auf eine Betätigung des Benutzers, hier über eine Funkfernbedienung oder dergleichen, zurück. Denkbar ist aber auch, dass die die Soll-Klappenverstellung von einer übergeordneten Kraftfahrzeugsteuerung vorgegeben wird.

Vorzugsweise stellt die Antriebssteuerung 1 den die Ausweichbewegung durchführenden Klappenflügel 4, 5 nach der Ausweichbewegung in seine Ausgangsstellung zurück. Denkbar ist aber auch, dass die Antriebssteuerung 1 den die Ausweichbewegung durchführenden Klappenflügel 4, 5 nach seiner Ausweichbewegung in seine Öffnungsstellung verstellt.

Die Darstellung gemäß Fig. 2 zeigt, dass den beiden Klappenflügeln 4, 5 jeweils ein sich an den Kollisions-Schwenkbereich 8, 9 anschließender Freilauf-Schwenkbereich 12, 13 zugeordnet ist, in dem eine Überlappung der Bewegungsbereiche der beiden Klappenflügel 4, 5 in obigem Sinne ausgeschlossen ist. Auch die Freilauf-Schwenkbereiche 12, 13 sind in der Antriebssteuerung 1 gespeichert. Entsprechend leitet die Antriebssteucrung 1 keine Ausweichbewegung ein, solange stets mindestens ein Klappenflügel 4, 5 in seinem Freilauf-Schwenkbereich 12, 13 liegt oder zum Liegen kommt.

Es wurde schon darauf hingewiesen, dass sich aus dem obigen Überlappen der Bewegungsberciche 10, 11 eine zwingende Öffnungs- und Schließreihenfolgc innerhalb der Kollisions-Schwenkbereiche 8, 9 der Klappenflügel 4, 5 ergibt. Im Einzelnen ist beim Schließen zunächst ein innerer Klappenflügel 4 und dann ein äußerer Klappenflügel 5 zu schließen, während beim Öffnen zunächst der äußere Klappenflügel 5 und dann der innere Klappenflügel 4 zu öffnen ist. Andernfalls würde der eine Klappenflügel 4, 5 dem anderen Klappenflügel 5,4 im Wege stehen.

Im Folgenden werden zwei Soll-Klappenverstellungen diskutiert, die für die vorschlagsgemäße Lösung von besonderer Bedeutung sind.

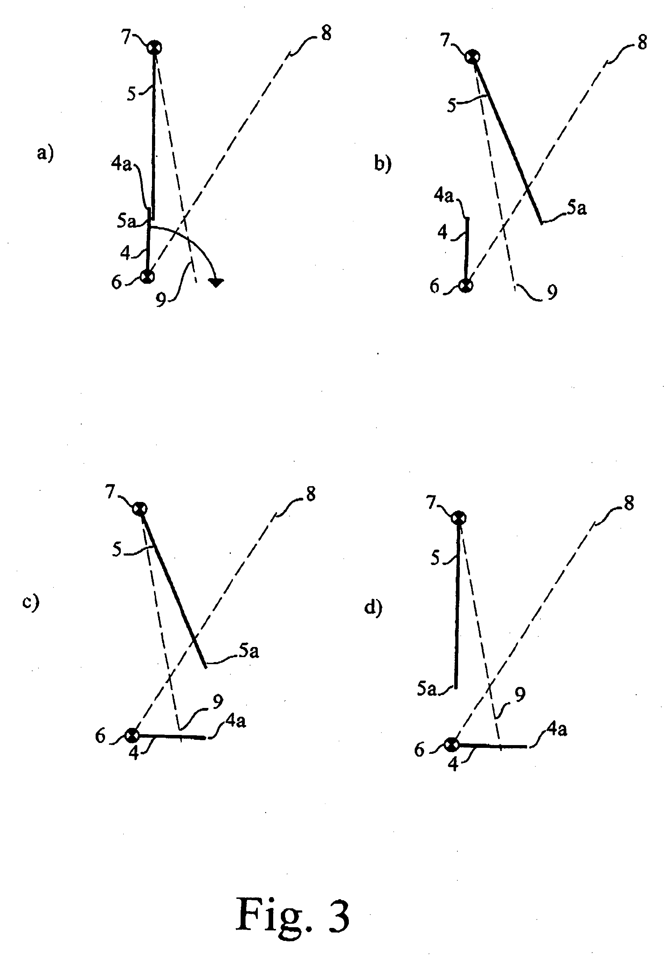

Bei einer bevorzugten Variante einer Soll-Klappenverstellung liegen als Ausgangspunkt beide Klappenflügel 4, 5 in ihrem Kollisions-Schwenkbereich 8, 9, wobei nur der innere Klappenflügel 4 in Öffnungsrichtung verstellt werden soll. Dieser Zustand entspricht der Darstellung gemäß Fig. 3a). In diesem Fall verstellt die Antriebssteuerung 1 zunächst den äußeren Klappenflügel 5 aus seiner in Fig. 3a) dargestellten Ausgangsstellung heraus in einer außerhalb seines Kollisions-Schwenkbereichs 9 liegende Parkstellung, die in Fig. 3b) dargestellt ist. Anschließend oder im Wesentlichen gleichzeitig verstellt die Antriebssteuerung 1 den inneren Klappenflügel 4 in Öffnungsrichtung, wie in Fig. 3c) dargestellt. Schließlich stellt die Antriebssteuerung 1 den äußeren Klappenflügel 5 in seine Ausgangsstellung zurück. Dies ist in Fig. 3b) dargestellt.

Im Ergebnis gibt der Benutzer nur die Soll-Klappenverstellung vor, nämlich, dass der innere Klappenflügel 4 in Öffnungsrichtung verstellt wird. Die kollisionsfreie Umsetzung dieser Soll-Klappenverstellung übernimmt dann wie oben erläutert die Antriebssteuerung 1.

Eine zweite bevorzugte Variante für eine Soll-Klappenverstellung ist eng verwandt mit der letztgenannten Soll-Klappenverstellung. Hier ist es als Ausgangspunkt vorgesehen, dass der innere Klappenflügel 4 außerhalb seines Kollisions-Schwenkbereichs 8 und der äußere Klappenflügel 5 innerhalb seines Kollisions-Schwenkbereichs 9 liegt, wobei nun der innere Klappenflügel 4 in Schließrichtung verstellt werden soll. Für diesen Fall verstellt die Antriebssteuerung 1 zunächst den äußeren Klappenflügel 5 aus seiner Ausgangsstellung heraus in eine außerhalb seines Kollisions-Schwenkbcrcichs 9 liegende Parkstellung. Anschließend oder im Wesentlichen gleichzeitig verstellt die Antriebssteuerung 1 den inneren Klappenflügel 4 in Schließrichtung. Schließlich wird der äußere Klappenflügel 5 wieder in seine Ausgangsstellung zurückgestellt. Bei dieser zweiten Variante der Soll-Klappenverstellung handelt es sich also im Wesentlichen um eine Umkehrung der erstgenannten Soll-Klappenverstellung.

Grundsätzlich kann es vorgesehen sein, dass die außerhalb des jeweiligen Kollisions-Schwenkbereichs 8, 9 liegenden Parkstellungen der beiden Klappenflügel 4, 5 bei jeder Bewegung neu berechnet werden. Hier und vorzugsweise ist es allerdings so, dass die Parkstellungen der beiden Klappenflügel 4, 5 vorbestimmte, in der Antriebssteuerung 1 gespeicherte Stellungen der Klappenflügel 4, 5 sind.

Es versteht sich, dass wesentlich für die Umsetzung der vorschlagsgemäßen Lösung die Ausstattung der Antriebssteuerung 1 mit Mitteln zur Ermittlung der Schwenkstellungen der beiden Klappenflügel 4, 5 ist. Insbesondere handelt es sich bei diesen Mitteln um Drehhcber oder dergleichen. Denkbar ist aber auch, dass diese Mittel auf einer Zeitmessung beruhen, die Aufschluss über die Schwenkstellung der Klappenflügel 4, 5 geben. Andere Varianten sind denkbar.

Nach einer weiteren Lehre, der ebenfalls eigenständige Bedeutung zukommt, wird die oben erläuterte Klappenanordnung für ein Kraftfahrzeug beansprucht. Auf alle diesbezüglichen Ausführungen darf verwiesen werden.

Hier und vorzugsweise sind die beiden Schwenkachsen 6, 7 der Klappenflügel 4, 5 im Wesentlichen horizontal ausgerichtet. Denkbar ist aber, dass die beiden Schwenkachsen 6, 7 der Klappenflügel 4, 5 im Wesentlichen vertikal oder in noch anderer Weise ausgerichtet sind. Dies ist beispielsweise bei der Klappenanordnung als Seitentüranordnung der Fall.

Für den Fall, dass die beiden Schwenkachsen 6, 7 der Klappenflügel 4, 5 im Wesentlichen horizontal ausgerichtet sind, ist es vorzugsweise so, dass der innere Klappenflügel 4 dem unteren Klappenflügel 4 und der obere Klappenflügel 5 dem äußeren Klappenflügeln 5 entspricht. Das kann grundsätzlich auch umgekehrt vorgesehen sein.

Es wurde schon darauf hingewiesen, dass die Klappenflügel 4, 5 einer Heckklappenanordnung oder einer Seitentüranordnung eines Kraftfahrzeugs zugeordnet sein können. Auch hier sind andere Varianten denkbar.

## Patentansprüche

1. Antriebsanordnung zur motorischen Verstellung einer Klappenanordnung für ein Kraftfahrzeug, mit einer Antriebssteuerung (1) zur Umsetzung einer jeweils vorgegebenen Soll-Klappenverstellung mittels mindestens eines Antriebs (2, 3),
wobei die Klappenanordnung zweiflügelig ausgestaltet ist, wobei die beiden Klappenflügel (4, 5) im Wesentlichen um zwei voneinander beabstandete, parallele Schwenkachsen (6, 7) schwenkbar sind und im geschlossenen Zustand über ihre der jeweiligen Schwenkachse (6, 7) gegenüberliegenden freien Flügelende (4a, 5a) miteinander in Eingriff stehen,
wobei den beiden Klappenflügeln (4, 5) der jeweiligen Schließstellung vorgelagerte Kollisions-Schwenkbereiche (8, 9) zugeordnet sind, in denen die Bewegungsbereiche (10, 11) der Klappenflügel (4, 5) derart überlappen, dass dort zur Vermeidung von Kollisionen zwischen den freien Flügelenden (4a, 5a) eine vorbestimmte Öffnungs- und Schließreibenfolge einzuhalten ist,
**dadurch gekennzeichnet, dass** die beiden Kollisions-Schwenkbereiche in der Antriebssteuerung (1) gespeichert sind und dass für den Fall, dass eine Soll-Klappenverstellung der vorbestimmten Öffnungs- und Schließreihenfolge in den Kollisions-Schwenkbereichen (8, 9) der Klappenflügel (4, 5) zuwiderläuft, die Antriebssteuerung (I) zur Kollisionsvermeidung einen der Klappenflügel (4, 5) in einer Ausweichbewegung vorübergehend aus seiner Ausgangsstellung heraus in eine außerhalb seines Kollisions-Schwenkbereichs (8, 9) liegende Parkstellung schwenkt.

2. Antriebsanordnung nach Anspruch 1, **dadurch gekennzeichnet, dass** die Vorgabe der Soll-Klappenverstellung auf eine Betätigung des Benutzers, insbesondere über eine Funkfernbedienung o. dgl., zurückgeht.

3. Antriebsanordnung nach Anspruch 1 oder 2, **dadurch gekennzeichnet, dass** die Antriebssteuerung (1) den die Ausweichbewegung durchführenden Klappenflügel (4, 5) im Anschluß an die Ausweichbewegung in seine Ausgangsstellung zurückstellt, oder, dass die Antriebssteuerung (1) den die Ausweichbewegung durchführenden Klappenflügel (4, 5) im Anschluß an seine Ausweichbewegung in seine Öffnungsstellung verstellt.

4. Antriebsanordnung nach einem der vorhergehenden Ansprüche, **dadurch gekennzeichnet, dass** den beiden Klappenflügel (4, 5) jeweils ein sich an den Kollisions-Schwenkbereich (8, 9) anschließender Freilauf-Schwenkbereich (12, 13) zugeordnet ist, in dem eine Überlappung der Bewegungsbereiche (10, 11) der beiden Klappenflügel (4, 5) ausgeschlossen ist und dass die Antriebssteuerung (1) keine Ausweichbewegung einleitet, solange stets mindestens ein Klappenflügel (4, 5) in seinem Freilauf-Schwenkbereich (12, 13) liegt oder zu liegen kommt.

5. Antriebsanordnung nach einem der vorhergehenden Ansprüche, **dadurch gekennzeichnet, dass** gemäß der vorbestimmten Öffrungs- und Schließreihenfolge beim Schließen zunächst ein innerer Klappenflügel (4) und dann ein äußerer Klappenflügel (5) geschlossen wird und dass beim Öffnen zunächst der äußere Klappenflügel (5) und dann der innere Klappenflügel (4) geöffnet wird.

6. Antriebsanordnung nach einem der vorhergehenden Ansprüche, **dadurch gekennzeichnet, dass** für den Fall, dass gemäß einer Soll-Klappenverstellung als Ausgangspunkt beide Klappenflügel (4, 5) in ihrem Kollisions-Schwenkbereich (8, 9) liegen und nur der innere Klappenflügel (4) in Öffnungsrichtung verstellt werden soll, die Antriebssteuerung (1) zunächst den äußeren Klappenflügel (5) aus seiner Ausgangsstellung heraus in eine außerhalb seines Kollisions-Schwenkbereichs (9) liegende Parkstellung verstellt, anschließend oder im Wesentlichen gleichzeitig den inneren Klappenflügel (4) in Öffnungsrichtung verstellt und schließlich den äußeren Klappenflügel (5) in seine Ausgangsstellung zurückstellt.

7. Antriebsanordnung nach einem der vorhergehenden Ansprüche, **dadurch gekennzeichnet, dass** für den Fall, dass gemäß einer Soll-Klappenverstellung als Ausgangspunkt der innere Klappenflügel (4) außerhalb seines Kollisions-Schwenkbereichs (8) und der äußere Klappenflügel (5) innerhalb seines Kollisions-Schwenkbereichs (9) liegt und der innere Klappenflügel (4) in Schließrichtung verstellt werden soll, die Antriebssteuerung (1) zunächst den äußeren Klappenflügel (5) aus seiner Ausgangsstellung heraus in eine außerhalb seines Kollisions-Schwenkbereichs (9) liegenden Parkstellung verstellt, anschließend oder im Wesentlichen gleichzeitig den inneren Klappenflügel (4) in Schließrichtung verstellt und schließlich den äußeren Klappenflügel (5) in seine Ausgangsstellung zurückstellt.

8. Antriebsanordnung nach einem der vorhergehenden Ansprüche, **dadurch gekennzeichnet, dass** die außerhalb des Kollisions-Schwenkbereichs (8, 9) liegenden Parkstellungen der beiden Klappenflügel (4, 5) vorbestimmte, in der Antriebssteuerung (1) gespeicherte Stellungen der Klappenflügel (4, 5) sind.

9. Antriebsanordnung nach einem der vorhergehenden Ansprüche, **dadurch gekennzeichnet, dass** der Antriebsstcuerung (1) Mittel, insbesondere Drehgeber o. dgl., zur Ermittlung der Schwenkstellungen der beiden Klappenflügel (4, 5) zugeordnet sind.

10. Klappenanordnung für ein Kraftfahrzeug mit zwei Klappenflügeln (4, 5), die im Wesentlichen um zwei voneinander beabstandete, parallele Schwenkachsen (6, 7) schwenkbar sind und im geschlossenen Zustand über ihre der jeweiligen Schwenkachse (6, 7) gegenüberliegenden freien Flügelenden (4a, 5a) miteinander in Eingriff stehen,
wobei den beiden Klappenflügeln (4, 5) der jeweiligen Schließstellung vorgelagerte Kollisions-Schwenkbereiche (8, 9) zugeordnet sind, in denen die Bewegungsbereiche (10, 11) der Klappenflügel (4, 5) derart überlappen, dass dort zur Vermeidung von Kollisionen zwischen den freien Flügelenden (4a, 5a) eine vorbestimmte Öffnungs- und Schließreihenfolge einzuhalten ist,
wobei eine Antriebsanordnung zur motorischen Verstellung der Klappenanordnung mit einer Antriebssteuerung (1) zur Umsetzung einer vorgegebenen Soll-Klappenverstellung mittels mindestens eines Antriebs (2, 3) vorgesehen ist,
**dadurch gekennzeichnet, dass** die beiden Kollisions-Schwenkbereiche (8, 9) in der Antriebssteuerung (1) gespeichert sind und dass für den Fall, dass eine Soll-Klappenverstellung der vorbestimmten Öffnungs- und Schließreihenfolge in den Kollisions-Schwenkbereichen (8, 9) der Klappenflügel (4, 5) zuwiderläuft, die Antriebssteuerung (1) zur Kollisionsvermeidung einen der Klappenflügel (4, 5) in einer Ausweichbewegung vorübergehend aus seiner Ausgangsstellung heraus in eine außerhalb seines Kollisions-Schwenkbereichs (8, 9) liegende Parkstellung schwenkt.

11. Klappenanordnung nach Anspruch 10, **dadurch gekennzeichnet, dass** die Antriebsanordnung nach einem der Ansprüche 1 bis 9 ausgestaltet ist.

12. Klappenanordnung nach Anspruch 10 oder 11, **dadurch gekennzeichnet, dass** die beiden Schwenkachsen (6, 7) der Klappenflügel (4, 5) im Wesentlichen horizontal ausgerichtet sind, und, vorzugsweise, dass der innere Klappenflügels (4) dem unteren Klappenflügel (4) und der obere Klappenflügel (5) dem äußeren Klappenflügel (5) entspricht.

13. Klappenanordnung nach einem der Ansprüche 10 bis 12, **dadurch gekennzeichnet, dass** die Klappenflügel (4, 5) einer Heckklappenanordnung oder einer Seitentüranordnung eines Kraftfahrzeugs zugeordnet sind.

## Claims

1. Drive arrangement for the motorized adjustment of a flap arrangement for a motor vehicle, with a drive controller (1) for realizing a respectively predefined desired flap adjustment by means of at least one drive (2, 3),
wherein the flap arrangement is configured with two wings, wherein the two flap wings (4, 5) are substantially pivotable about two spaced-apart, parallel pivot axes (6, 7) and, in the closed state, are in engagement with each other via the free wing ends (4a, 5a) thereof opposite the respective pivot axis (6, 7),
wherein the two flap wings (4, 5) are assigned collusion pivoting regions (8, 9) which are mounted upstream of the respective closed position and in which the movement regions (10, 11) of the flap wings (4, 5) overlap in such a manner that a predetermined opening and closing sequence has to be observed there in order to avoid collisions between the free wing ends (4a, 5a),
**characterized in that** the two collision pivoting regions are stored in the drive controller (1) and **in that**, in the event that a desired flap adjustment runs counter to the predetermined opening and closing sequence in the collision pivoting regions (8, 9) of the flap wings (4, 5), the drive controller (1) temporarily pivots one of the flap wings (4, 5) out of the initial position thereof in a deviating movement into a parking position located outside the collision pivoting region (8, 9) of said flap wing in order to avoid a collision.

2. Drive arrangement according to Claim 1, **characterized in that** the requirement for the desired flap adjustment is based on an actuation by the user, in particular via a radio remote control or the like.

3. Drive arrangement according to Claim 1 or 2, **characterized in that** the drive controller (1) resets the flap wing (4, 5) carrying out the deviating movement, following the deviating movement, into the initial position thereof, or **in that** the drive controller (1) adjusts the flap wing (4, 5) carrying out the deviating movement, following the deviating movement thereof, into the open position thereof.

4. Drive arrangement according to one of the preceding claims, **characterized in that** the two flap wings (4, 5) are each assigned a freewheeling pivoting region (12, 13) which adjoins the collision pivoting region (8, 9) and in which an overlapping of the movement regions (10, 11) of the two flap wings (4, 5) is prevented, and **in that** the drive controller (1) does not initiate any deviating movement if at least one flap wing (4, 5) is always located or comes to be located in the freewheeling pivoting region (12, 13) thereof.

5. Drive arrangement according to one of the preceding claims, **characterized in that**, according to the predetermined opening and closing sequence, during the closing, first of all an inner flap wing (4) and then an outer flap wing (5) is closed, and **in that**, during the opening, first of all the outer flap wing (5) and then the inner flap wing (4) is opened.

6. Drive arrangement according to one of the preceding claims, **characterised in that**, in the event that, according to a desired flap adjustment, as a starting point the two f lap wings (4, 5) are located in the collision pivoting region (8, 9) thereof and only the inner flap wing (4) is intended to be adjusted in the opening direction, the drive controller (1) first of all adjusts the outer flap wing (5) out of the initial position thereof into a parking position located outside the collision pivoting region (9) thereof, and subsequently or substantially at the same time adjusts the inner flap wing (4) in the opening direction and finally resets the outer flap wing (5) into the initial position thereof.

7. Drive arrangement according to one of the preceding claims, **characterised in that**, in the event that, according to a desired flap adjustment, as a starting point the inner flap wing (4) is located outside the collision pivoting region (8) thereof and the outer flap wing (5) is located within the collision pivoting region (9) thereof and the inner flap wing (4) is intended to be adjusted in the closing direction, the drive controller (1) first of all adjusts the outer flap wing (5) out of the initial position thereof into a parking position located outside the collision pivoting region (9) thereof, and subsequently or substantially at the same time adjusts the inner flap wing (4) in the closing direction and finally resets the outer flap wing (5) into the initial position thereof.

8. Drive arrangement according to one of the preceding claims, **characterized in that** the parking positions of the two flap wings (4, 5), which parking positions are located outside the collision pivoting region (8, 9), are predetermined positions of the flap wings (4, 5) that are stored in the drive controller (1).

9. Drive arrangement according to one of the preceding claims, **characterized in that** the drive controller (1) is assigned means, in particular rosary sensors or the like, for determining the pivoting positions of the two flap wings (4, 5).

10. Flap arrangement for a motor vehicle with two flap wings (4, 5) which are substantially pivotable about two spaced-apart, parallel pivot axes (6, 7) and, in the closed state, are in engagement with each other via the free wing ends (4a, 5a) thereof opposite the respective pivot axis (6, 7),
wherein the two flap wings (4, 5) are assigned collision pivoting regions (8, 9) which are mounted upstream of the respective closed position and in which the movement regions (10, 11) of the flap wings (4, 5) overlap in such a manner that a predetermined opening and closing sequence has to be observed there in order to avoid collisions between the free wing ends (4a, 5a),
wherein a drive arrangement for the motorized adjustment of the flap arrangement is provided with a drive controller (1) for realising a predefined desired flap adjustment by means of at least one drive (2, 3),
**characterized in that** the two collision pivoting regions are stored in the drive controller (1) and **in that**, in the event that a desired flap adjustment runs counter to the predetermined opening and closing sequence in the collision pivoting regions (8, 9) of the flap wings (4, 5), the drive controller (1) temporarily pivots one of the flap wings (4, 5) out of the initial position thereof in a deviating movement into a parking position located outside the collision pivoting region (8, 9) of said flap wing in order to avoid a collision.

11. Flap arrangement according to Claim 10, **characterized in that** the drive arrangement is configured according to one of Claims 1 to 9.

12. Flap arrangement according to Claim 10 or 11, **characterized in that** the two pivot axes (6, 7) of the flap wings (4, 5) are oriented substantially horizontally, and, preferably, **in that** the inner flap wing (4) corresponds to the lower flap wing (4) and the upper flap wing (5) corresponds to the outer flap wing (5).

13. Flap arrangement according to one of Claims 10 to 12, **characterized in that** the flap wings (4, 5) are assigned to a tailgate arrangement or to a side door arrangement of a motor vehicle.

## Revendications

1. Agencement d'entraînement pour le réglage par moteur d'un agencement de hayon pour un véhicule automobile, comprenant une commande d'entraînement (1) pour réaliser un réglage de consigne respectivement prédéfini du hayon au moyen d'au moins un entraînement (2, 3),
l'agencement de hayon étant configuré avec deux ailes, les deux ailes de hayon (4, 5) pouvant pivoter essentiellement autour de deux axes de pivotement parallèles espacés l'un de l'autre (6, 7) et, dans l'état fermé, étant en prise l'une avec l'autre par le biais de leurs extrémités d'ailes libres (4a, 5a) opposées à l'axe de pivotement respectif (6, 7),
des régions de pivotement de collision (8, 9) situées avant la position de fermeture respective étant associées aux deux ailes de hayon (4, 5), dans lesquelles les régions de déplacement (10, 11) des ailes de hayon (4, 5) se chevauchent de telle sorte que dans celles-ci, pour éviter des collisions entre les extrémités d'ailes libres (4a, 5a), une séquence d'ouverture et de fermeture prédéterminée doive être respectée,
**caractérisé en ce que** les deux régions de pivotement de collision sont mémorisées dans la commande d'entraînement (1) et **en ce que** dans le cas où un réglage de consigne du hayon va à l'encontre de la séquence d'ouverture et de fermeture prédéterminée dans les régions de pivotement de collision (8, 9) des ailes de hayon (4, 5), la commande d'entraînement (1), pour éviter une collision, fait pivoter l'une des ailes de hayon (4, 5) dans un mouvement d'évitement temporairement depuis sa position de départ dans une position de rangement située à l'extérieur de sa région de pivotement de collision (8, 9).

2. Agencement d'entraînement selon la revendication 1, **caractérisé en ce que** l'établissement préalable du réglage de consigne du hayon est basé sur un actionnement par l'utilisateur, en particulier par le biais d'une commande à distance radio ou similaire.

3. Agencement d'entraînement selon la revendication 1 ou 2, **caractérisé en ce que** la commande d'entraînement (1) ramène l'aile de hayon (4, 5) effectuant le mouvement d'évitement, suite au mouvement d'évitement, dans sa position de départ ou **en ce que** la commande d'entraînement (1) déplace l'aile de hayon (4, 5) effectuant le mouvement d'évitement, suite à son mouvement d'évitement, dans sa position d'ouverture.

4. Agencement d'entraînement selon l'une quelconque des revendications précédentes, **caractérisé en ce qu'**à chaque fois une région de pivotement libre (12, 13) se raccordant à la région de pivotement de collision (8, 9) est associée aux deux ailes de hayon (4, 5), dans laquelle un chevauchement des régions de déplacement (10, 11) des deux ailes de hayon (4, 5) est exclu et **en ce que** la commande d'entraînement (1) n'amorce aucun mouvement d'évitement tant qu'au moins une aile de hayon (4, 5) se trouve toujours dans sa région de pivotement libre (12, 13) ou vient s'y placer.

5. Agencement d'entraînement selon l'une quelconque des revendications précédentes, **caractérisé en ce qu'**en fonction de la séquence d'ouverture et de fermeture prédéterminée, lors de la fermeture, d'abord une aile de hayon interne (4) puis une aile de hayon externe (5) est fermée, et **en ce que** lors de l'ouverture, d'abord l'aile de hayon externe (5) puis l'aile de hayon interne (4) est ouverte.

6. Agencement d'entraînement selon l'une quelconque des revendications précédentes, **caractérisé en ce que** dans le cas où, en fonction d'un réglage de consigne du hayon en tant que point de départ, les deux ailes de hayon (4, 5) sont situées dans la région de pivotement de collision (8, 9) et que seulement l'aile de hayon interne (4) doit être déplacée dans la direction d'ouverture, la commande d'entraînement (1) déplace d'abord l'aile de hayon externe (5) hors de sa position de départ dans une position de rangement située à l'extérieur de sa région de pivotement de collision (9), puis ou essentiellement simultanément, déplace l'aile de hayon interne (4) dans la direction d'ouverture et finalement ramène l'aile de hayon externe (5) dans sa position de départ.

7. Agencement d'entraînement selon l'une quelconque des revendications précédentes, **caractérisé en ce que** dans le cas où, en fonction d'un réglage de consigne du hayon en tant que point de départ, l'aile de hayon interne (4) est située à l'extérieur de sa région de pivotement de collision (8) et l'aile de hayon externe (5) est située à l'intérieur de sa région de pivotement de collision (9) et l'aile de hayon interne (4) doit être déplacée dans la direction de fermeture, la commande d'entraînement (1) déplace d'abord l'aile de hayon externe (5) hors de sa position de départ dans une position de rangement située à l'extérieur de sa région de pivotement de collision (9), puis ou essentiellement simultanément déplace l'aile de hayon interne (4) dans la direction de fermeture et finalement ramène l'aile de hayon externe (5) dans sa position de départ.

8. Agencement d'entraînement selon l'une quelconque des revendications précédentes, **caractérisé en ce que** les positions de rangement à l'extérieur de la région de pivotement de collision (8, 9) des deux ailes de hayon (4, 5) sont des positions prédéterminées des ailes de hayon (4, 5) mémorisées dans la commande d'entraînement (1) .

9. Agencement d'entraînement selon l'une quelconque des revendications précédentes, **caractérisé en ce que** la commande d'entraînement (1) est associée à des moyens, en particulier des détecteurs ou similaires, pour déterminer les positions de pivotement des deux ailes de hayon (4, 5).

10. Agencement de hayon pour un véhicule automobile comprenant deux ailes de hayon (4, 5), qui peuvent pivoter essentiellement autour de deux axes de pivotement parallèles espacés l'un de l'autre (6, 7) et qui, dans l'état fermé, sont en prise l'une avec l'autre par le biais de leurs extrémités d'ailes libres (4a, 5a) opposées à l'axe de pivotement respectif (6, 7),
des régions de pivotement de collision (8, 9) situées avant la position de fermeture respective étant associées aux deux ailes de hayon (4, 5), dans lesquelles les régions de déplacement (10, 11) des ailes de hayon (4, 5) se chevauchent de telle sorte que dans celles-ci, pour éviter des collisions entre les extrémités d'ailes libres (4a, 5a), une séquence d'ouverture et de fermeture prédéterminée doive être respectée,
un agencement d'entraînement pour le réglage par moteur de l'agencement de hayon étant pourvu d'une commande d'entraînement (1) pour réaliser un réglage de consigne prédéfini du hayon au moyen d'au moins un entraînement (2, 3),
**caractérisé en ce que** les deux régions de pivotement de collision (8, 9) sont mémorisées dans la commande d'entraînement (1) et **en ce que** dans le cas où un réglage de consigne du hayon va à l'encontre de la séquence d'ouverture et de fermeture prédéterminée dans les régions de pivotement de collision (8, 9) des ailes de hayon (4, 5), la commande d'entraînement (1), pour éviter une collision, fait pivoter l'une des ailes de hayon (4, 5) dans un mouvement d'évitement temporairement depuis sa position de départ dans une position de rangement située à l'extérieur de sa région de pivotement de collision (8, 9).

11. Agencement de hayon selon la revendication 10, **caractérisé en ce que** l'agencement d'entraînement est configuré selon l'une quelconque des revendications 1 à 9.

12. Agencement de hayon selon la revendication 10 ou 11, **caractérisé en ce que** les deux axes de pivotement (6, 7) des ailes de hayon (4, 5) sont orientés essentiellement horizontalement et, de préférence, **en ce que** l'aile de hayon interne (4) correspond à l'aile de hayon inférieure (4) et l'aile de hayon supérieure (5) correspond à l'aile de hayon externe (5).

13. Agencement de hayon selon l'une quelconque des revendications 10 à 12, **caractérisé en ce que** les ailes de hayon (4, 5) sont associées à un
agencement de hayon arrière ou à un agencement de porte latérale d'un véhicule automobile.
